# EUROPÄISCHE PATENTSCHRIFT

(11) **EP 0 935 713 B1**
(45) Veröffentlichungstag und Bekanntmachung des Hinweises auf die Patenterteilung: **01.10.2003**
(21) Anmeldenummer: 97945764.5
(22) Anmeldetag: 20.10.1997
(51) Int. Cl.: F15B 11/04

(54) **VENTILANORDNUNG UND VERFAHREN ZUR ANSTEUERUNG EINER DERARTIGEN VENTILANORDNUNG**
VALVE SYSTEM AND MANUFACTURE OF SAME
SYSTEME DE SOUPAPE ET PROCEDE DE REALISATION

(30) Priorität: 11.11.1996 DE 29622693 U; 26.02.1997 DE 19707722
(43) Veröffentlichungstag der Anmeldung: 18.08.1999
(73) Patentinhaber: Bosch Rexroth AG, 97816 Lohr am Main (DE)
(72) Erfinder: KNÖLL, Burkhard, D-97816 Lohr (DE); RÜB, Winfried, D-97845 Neustadt (DE)
(74) Vertreter: Polte, Willi, Dr.-Ing. Dipl.-Ing.
(86) Internationale Anmeldenummer: DE9702421
(87) Internationale Veröffentlichungsnummer: WO98021484

(56) Entgegenhaltungen:
- EP-A- 0 163 771
- DE-A- 2 118 936
- FR-A- 2 362 290
- US-A- 5 220 862
- "GRUNDLAGEN DER HYDRAULISCHEN SCHALTUNGSTECHNIK" ÖLHYDRAULIK UND PNEUMATIK, Bd. 37, Nr. 8, 1.August 1993, DE-MAINZ, Seiten 618-621, XP000413160
- PATENT ABSTRACTS OF JAPAN vol. 016, no. 529 (M-1332), 29.Oktober 1992 & JP 04 197724 A (JAPAN STEEL WORKS), 17.Juli 1992,

## Beschreibung

Die Erfindung betrifft eine Ventilanordnung zur Ansteuerung eines Verbrauchers gemäß dem Oberbegriff des Patentanspruches 1 und ein Verfahren zur Ansteuerung einer derartigen Ventilanordnung.

Derartige Ventilanordnungen werden in der Mobilhydraulik zur Ansteuerung von einfach und doppelt wirkenden Verbrauchern, wie beispielsweise Hydromotoren bzw. Krafthebern verwendet.

Ein per se bekannter Aufbau einer derartigen Ventilanordnung ist in der US-A-4 201 052 offenbart. Ein Wegeventil ist zwischen einer Pumpe und einem Verbraucher angeordnet, wobei in jeder Arbeitsleitung zum Verbraucher ein Drosselventil vorgesehen ist, über das der zu- oder ablaufende Hydraulikölvolumenstrom drosselbar ist.

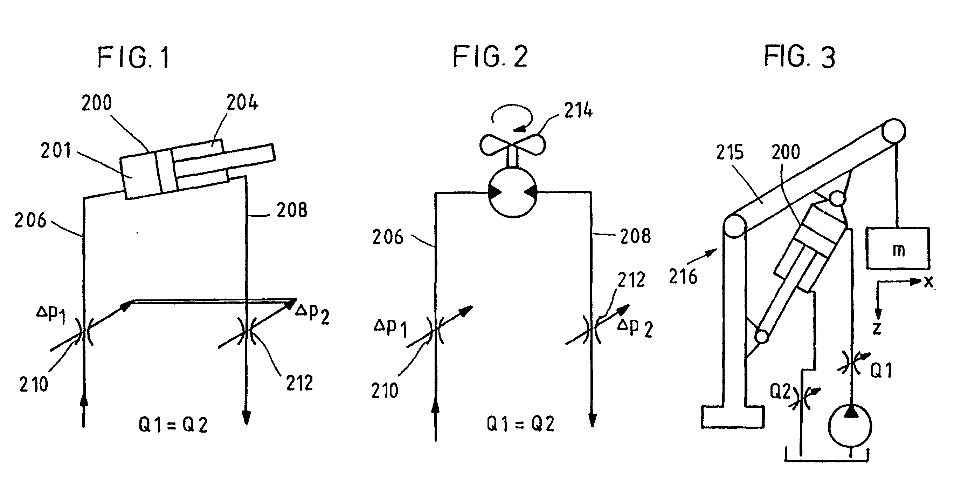

In den Figuren 1 bis 3, auf die bereits hier Bezug genommen sei, sind einige Anwendungsbeispiele für derartige bekannte Drosseleinrichtungen dargestellt.

Figur 1 zeigt eine Ventilanordnung zur Ansteuerung eines doppelt wirkenden Verbrauchers, der beispielsweise ein Hubzylinder 200 sein kann. An den Zylinderraum und den Ringraum des Hubzylinders 200 ist eine Arbeitsleitung 206 bzw. 208 angeschlossen. Zum Ausfahren des Hubzylinders 200 wird das Hydrauliköl über die Arbeitsleitung 206 dem Hubzylinder 200 zugeführt, wobei das aus dem Ringraum verdrängte Hydrauliköl durch die als Ablaufleitung wirkende Arbeitsleitung 208 zum Tank zurückgeführt wird.

Zur Drosselung des Hydraulikölzulaufes und -ablaufes sind in den beiden Arbeitsleitungen 206 und 208 zwei Ventildrosseln 210, 212 angeordnet, deren Ventilglieder mechanisch gekoppelt sind. Das Verhältnis der Zulauf- und Ablauföffnung der Ventildrosseln ist durch die mechanische Kopplung der Öffnungskanten des gemeinsamen Ventilschiebers vorgegeben, so daß sich einer bestimmten Einstellung der Ventildrossel 210 auch ein Druckverlust Δp2 in der Ablaufleitung (Arbeitsleitung 208) einstellt. Dieser Druckverlust ist insbesondere beim Anschluß von einfach wirkenden Verbrauchern unerwünscht, da er keine sinnvolle Funktion darstellt. Der Druckverlust führt zu Energieverlusten, zu einem Aufheizen des Hydrauliköls und gegebenenfalls zu einem vorzeitigen Verschleiß der Ventildrossel.

In Figur 2 ist eine Ventilanordnung zur Ansteuerung eines Lüftermotors 214 dargestellt. Bei dieser Variante werden zwei unabhängig voneinander dosierbare Ventildrosseln 210, 212 verwendet, die bei einem Motor mit zwei Drehrichtungen jeweils zur Drosselung des Hydraulikölvolumenstromes in der Zulaufleitung verwendet werden können. Bei Verwendung eines Motors mit einer Drehrichtung erzeugt die Ablaufdrosselung - in diesem Fall die Ventildrossel 212 in der Ablaufleitung 208 - unnötige Druckverluste, so daß bei einer derartigen Ventilanordnung ebenfalls die vorstehend genannten Nachteile vorliegen.

Figur 3 zeigt eine Anwendung, bei der ein Hubzylinder 200 zum Heben oder Senken eines Auslegers 215 eines Hebewerkzeugs 216 verwendet wird. Zum Anheben der Last m wird der Zylinderraum des Hubzylinders 200 mit Hydrauliköl versorgt, so daß der Zylinder ausfährt und der Ausleger 215 in der Darstellung nach Figur 3 nach oben bewegt wird. Das sich im Ringraum befindliche Hydrauliköl wird durch die Ausfahrbewegung verdrängt und zum Tank zurückgeführt. Durch die am Ausleger 215 ziehende Last m wirkt eine resultierende Kraft auf den Hubzylinder 200, die bei waagerecht verlaufendem Ausleger 215 maximal ist und mit Verschwenkung des Auslegers 215 aus dieser Horizontalposition abnimmt. Je weiter der Ausleger 215 zur Horizontalposition absinkt, um so mehr erhöht sich das Gewicht auf der Ablaufseite des Hubzylinders 200, so daß dieser in der Darstellung nach Figur 3 nach unten gedrückt wird. Durch den ansteigenden Ablauf volumenstrom Q2 kann in der Zulauf leitung, die weiterhin mit einem Zulaufvolumenstrom Q1 beaufschlagt ist, Kaviatation auftreten, die die Bauelemente der Ventilanordnung in höchstem Maße beansprucht und auch zu Instabilitäten bei der Steuerung führen kann. Zu diesem Zweck ist es ebenfalls erforderlich, die Ablaufdrosselung an die Hebeverhältnisse der Hubvorrichtung anzupassen. Eine derartige Ablaufdrosselung erzeugt bei bestimmten Betriebsbedingungen Druckverluste, die aus den oben genannten Gründen nicht akzeptabel sind.

Um derartige unnötige Druckverluste zu vermeiden, hat man beispielsweise bei Motoranwendungen für Ackerschlepper sogenannte "drucklose Tankrückführungen" zur Verfügung gestellt, die an die Ablaufseite des Motors mittels einer Schnellkupplung angeschlossen werden und über die die Ablaufdrossel umgangen werden kann. Nachteilig bei einer derartigen Hilfskonstruktion ist, daß das Fahrzeug mit einem eigenen Tankstutzen mit Schnellkupplung versehen werden muß und daß die Bedienperson die drucklose Tankrückführung manuell anschließen muß. Eine derartige Hilfskonstruktion ist nur dann sinnvoll anwendbar, wenn der jeweilige Betriebszustand über längere Zeit aufrechterhalten werden soll. Bei einer Änderung der Verbraucheransteuerung, beispielsweise einem Wechsel der Drehrichtung des Motors etc., müssen Anschlüsse umgesteckt werden, so daß der Bedienungsaufwand erheblich ist.

Demgegenüber liegt der Erfindung die Aufgabe zugrunde, eine Ventilanordnung und ein Verfahren zur Steuerung einer Ventilanordnung zu schaffen, bei denen mit minimiertem vorrichtungstechnischen Aufwand die Energieverluste im Ablauf von einem Verbraucher auf ein Minimum reduzierbar sind.

Diese Aufgabe wird hinsichtlich der Vorrichtung durch die Merkmale des Patentanspruches 1 und hinsichtlich des Verfahrens durch die Merkmale des Patentanspruches 7 gelöst.

Durch die Maßnahme, die Ventilanordnung mit Drosseleinrichtungen in der Zulauf- und Ablaufleitung auszuführen und diese derart auszulegen, daß sie unabhängig von einer Zulaufdrossel ansteuerbar sind, kann die jeweils als Ablaufdrossel wirkende Drosseleinrichtung beim Anschluß von einfach wirkenden Verbrauchern, etc. auf einen maximalen Durchströmungsquerschnitt eingestellt werden, so daß die Druckverluste im Ablauf minimiert sind. Der Hydraulikölvolumenstrom wird dabei über ein als Zulaufdrossel wirkendes Wegeventil eingestellt.

Bevorzugt wird es, die Drosseleinrichtung mit zwei Funktionen zu versehen, wobei sie in der einen Funktion als entsperrbares Rückschlagventil wirkt und in der anderen Funktion mittels einer zusätzlichen Dosierkante zur Drosselung des Zulauf- oder Ablaufvolumenstromes benutzt werden kann.

Eine besonders einfache Ansteuerung der Drosseleinrichtung und des als Zulaufdrossel wirkenden Wegeventils erhält man, wenn eine Steuerseite des Wegeventils und eine der Drosseleinrichtungen jeweils mit dem gleichen Steuersignal beaufschlagt werden.

Die Drosseleinrichtung kann als Wegeventil mit einer Rückschlagschaltstellung und mehreren stetig verstellbaren Durchflußstellungen oder als Drosseleinrichtung mit getrennten Funktionselementen, wie beispielsweise mit Hauptkegel und Aufstoßkolben ausgebildet werden, die mechanisch miteinander gekoppelt sind.

Zur Ansteuerung der erfindungsgemäßen Ventilanordnung haben sich drei Varianten als besonders vorteilhaft herausgestellt.

Bei der ersten Variante wird zunächst nur der Steuerdruck für die ablaufseitige Drosseleinrichtung erhöht, während der andere Steuerdruck für die zulaufseitige Drosseleinrichtung konstant - vorzugsweise bei Null - gehalten wird. Der erste Steuerdruck wird solange erhöht bis sich eine vorbestimmmte Steuerdruckdifferenz einstellt, über die das als Zulaufdrossel wirkende Wegeventil in eine vorbestimmte Position bewegbar ist, um den Hydraulikölvolumenstrom einzustellen. Anschließend werden beide Steuerdrücke unter Beibehaltung der Steuerdruckdifferenz erhöht bis der Steuerdruck zur Ansteuerung der ablaufseitigen Drosseleinrichtung einen Maximalwert erreicht, in dem diese vollständig aufgesteuert ist.

Durch diese Vorgehensweise wird erreicht, daß die ablaufseitige Drosseleinrichtung vollständig aufgesteuert ist und somit einen minimalen Druckverlust erzeugt, wobei sich an der Zulaufdrossel (Wegeventil) eine beliebige Druckdifferenz einstellen läßt.

Bei einem alternativen Verfahren werden die Steuerdrücke für die ablaufseitige Drosseleinrichtung und die zulaufseitige Drosseleinrichtung gleichzeitig erhöht, wobei der erstgenannte Steuerdruck schneller als der letztgenannte Steuerdruck gesteigert wird. Diese Erhöhung der beiden Steuerdrücke erfolgt solange, bis sich die vorbestimmte Druckdifferenz eingestellt hat und der Steuerdruck für die ablaufseitige Drosseleinrichtung vollständig aufgesteuert ist, so daß diese wiederum mit minimalem Druckverlust durchströmt wird.

Bei einem weiteren Alternativverfahren werden zunächst beide Steuerdrücke auf ihren Maximalwert gebracht und dann der Steuerdruck für die zulaufseitige Drosseleinrichtung abgesenkt, bis sich die vorbestimmte Steuerdruckdifferenz am Wegeventil einstellt. Auch bei dieser Variante ist gewährleistet, daß die ablaufseitige Drosseleinrichtung bei Einstellung der Steuerdruckdifferenz vollständig aufgesteuert ist.

Sonstige vorteilhafte Weiterbildungen der Erfindung sind Gegenstand der weiteren Unteransprüche.

Im folgenden werden bevorzugte Ausführungsbeispiele der Erfindung anhand schematischer Zeichnungen näher erläutert. Es zeigen:
Figur 1 eine bekannte Ventilanordnung zur Ansteuerung eines Verbrauchers mit einer Zulauf- und einer Ablaufdrosselung;
Figur 2 eine bekannte Ventilanordnung zur Ansteuerung eines Lüfterantriebes mit einer Drehrichtung;
Figur 3 eine bekannte Ventilanordnung zur Ansteuerung eines Hebegerätes;
Figur 4 eine stark vereinfachte Prinzipskizze der erfindungsgemäßen Ventilanordnung;
Figur 5 eine Schnittdarstellung einer erfindungsgemäßen Ventilanordnung;
Fig. 6 eine Teildarstellung der Ventilanordnung aus Figur 5;
Figur 7 einen vereinfachten Hydraulikschaltplan der Ventilanordnung aus Figur 5;
Figur 8 einen Hydraulikschaltplan einer zweiten Ausführungsform der erfindungsgemäßen Ventilanordnung;
Figur 9 ein Diagramm zur Erläuterung der Ansteuerung der erfindungsgemäßen Ventilanordnungen nach einem ersten Verfahren;
Figur 10 ein Diagramm zur Erläuterung der Ansteuerung der erfindungsgemäßen Ventilanordnungen nach einem zweiten Verfahren und
Figur 11 ein Diagramm zur Erläuterung der Ansteuerung der erfindungsgemäßen Ventilanordnungen nach einem dritten Verfahren.

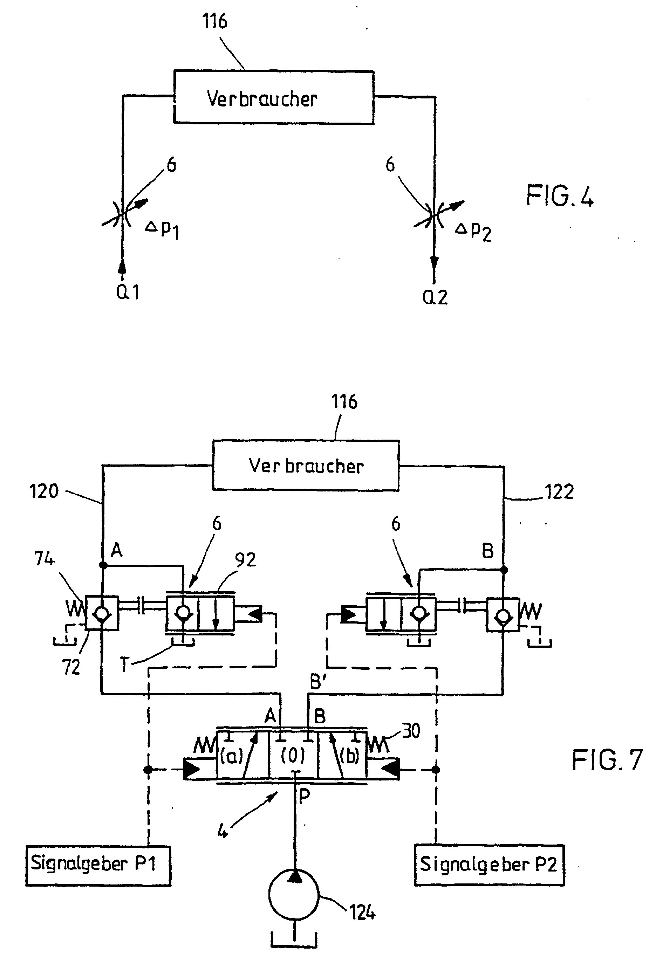

In Figur 4 ist die Logik einer erfindungsgemäßen Ventilanordnung zur Ansteuerung eines Verbrauchers 116 dargestellt. An diesen sind zwei Arbeitsleitungen als Zulauf- und Ablaufleitungen angeschlossen, in denen jeweils eine Drosseleinrichtung 6 zur Steuerung des Volumenstromes angeordnet ist, so daß der Volumenstrom des Hydrauliköls zum und/oder vom Verbraucher einstellbar ist. Bei einem doppelt wirkenden Verbraucher werden die beiden Drosseleinrichtungen 6 derart angesteuert, daß der Volumenstrom der Zulaufleitung Q1 gleich dem Volumenstrom in der Ablaufleitung Q2 ist. Die Ansteuerung erfolgt über Steuersignale 1, 2, die von einer nicht gezeigten Steuereinrichtung abgegeben wird. Die erfindungsgemäße unabhängige Zulauf- und Ablaufsteuerung ermöglicht es, beim Anschluß von einfach wirkenden Verbrauchern die Drosseleinrichtung 6 in der Ablaufleitung vollständig zu öffnen, so daß der Druckverlust in der Ablaufleitung und damit auch ein Aufheizen des Hydrauliköls und ein Verschleiß der Bauelemente auf ein Minimum reduziert ist.

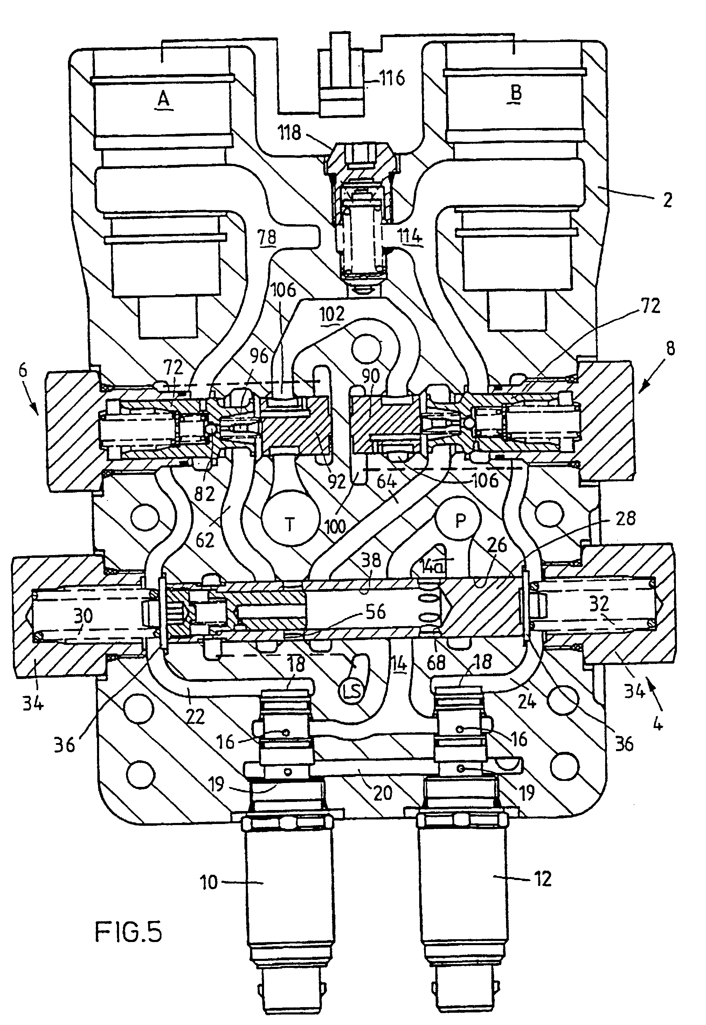

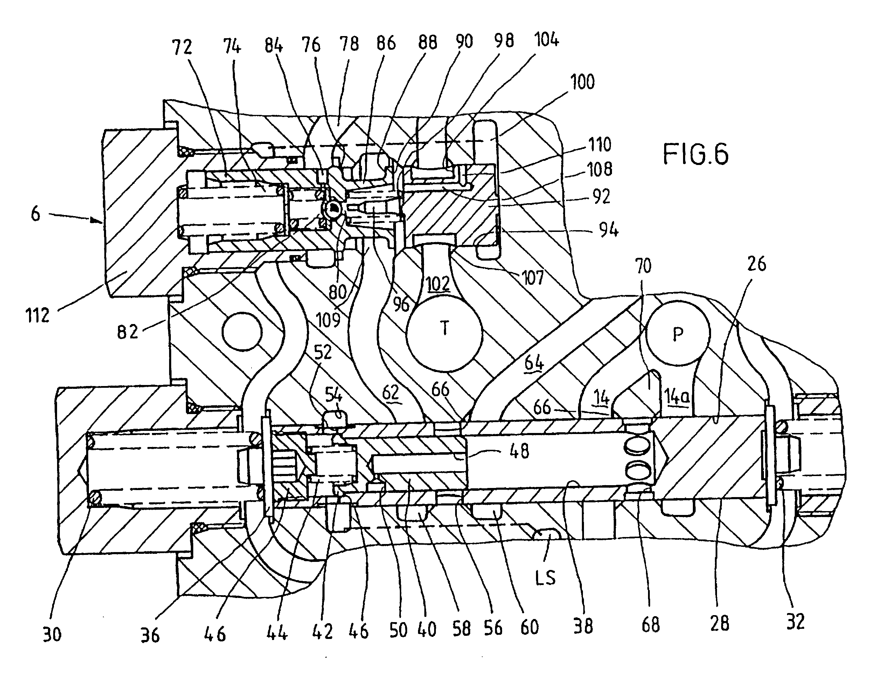

In den Figuren 5 und 6 wird ein konkretes Ausführungsbeispiel für eine derartige Ventilanordnung zur Ansteuerung von einfach und doppelt wirkenden Verbrauchern dargestellt. Eine derartige Ventilanordnung ist in der Voranmeldung 196 46 443.9 der Anmelderin beschrieben, deren Offenbarung zum Inhalt der vorliegenden Anmeldung zu zählen ist.

Fig. 5 zeigt eine Schnittdarstellung durch eine Ventilanordnung, die in Scheibenbauweise ausgeführt ist. Die Ventilscheibe oder -platte bildet ein Ventilgehäuse 2, in dem Aufnahmebohrungen für ein stetig verstellbares Wegeventil 4 und zwei Drosseleinrichtungen 6, 8 ausgebildet sind.

Die beiden Drosseleinrichtungen 6, 8 sind entlang einer gemeinsamen Achse angeordnet, die im Parallelabstand zur Achse des Wegeventils 4 verläuft.

In das Ventilgehäuse 2 sind des weiteren noch zwei Pilotventile 10, 12 in Patronenbauweise eingeschraubt, über die das wegeventil 4 und die beiden Drosseleinrichtungen 6, 8 ansteuerbar sind. Bei diesen Pilotventilen 10, 12 handelt es sich beispielsweise um elektrisch betätigbare Druckminderventile, über die der Druck an einem Pumpenanschluß P, der über einen Pumpenkanal 14 zu Radialanschlüssen 16 der Pilotventile 10, 12 geführt ist, auf einen Systemdruck am axialen Ausgangsanschluß 18 des jeweiligen Pilotventils 10, 12 reduzierbar ist. Jedes Pilotventil 10, 12 hat des weiteren noch einen Radialanschluß 19, der in einen Tankkanal 20 mündet, über den überschüssiges Hydraulikfluid zu einem Tankanschluß T zurückführbar ist.

Der Ausgangsanschluß 18 jedes Pilotventils 10, 12 mündet in einen Steuerkanal 22 bzw. 24, die in einer Ventilbohrung 26 münden, in der ein Ventilschieber 28 des Wegeventils 4 geführt ist. Die beiden Steuerkanäle 22, 24 münden beidseitig der Ventilschieberstirnseiten, so daß diese mit dem Druck im jeweiligen Steuerkanal 22, 24, d.h. mit dem Ausgangsdruck des Pilotventils 10 bzw. 12 beaufschlagt sind.

Der Ventilschieber 28 ist des weiteren durch zwei auf die Stirnseiten wirkende Druckfedern 30, 32 in seine dargestellte Nullposition vorgespannt. Die Ventilfedern sind an der Innenbohrung von Verschlußkappen 34 abgestützt, die in das Ventilgehäuse 2 eingeschraubt sind und somit den Axialabschluß der Ventilbohrung 26 bilden. Das andere Ende der Druckfedern 32, 34 liegt jeweils an einem Federteller 36 an, der in der dargestellten Nullstellung mit einem Umfangsabschnitt an einer Gehäuseschulter abgestützt ist.

Der Detailaufbau des Wegeventils 4 und der Drosseleinrichtung 6 wird im folgenden anhand Fig. 6 erläutert, die diese Bauelemente in vergrößerter Darstellung zeigt.

In den in Fig. 6 linken Endabschnitt des Ventilschiebers 28 ist eine sacklochförmige Innenbohrung 38 eingebracht, in der ein Druckwaagenkolben 40 axial verschiebbar geführt ist. In der in Fig. 6 gezeigten Nullstellung liegt der Druckwaagenkolben 40 - im folgenden Kolben 40 genannt - mit einem Radialbund 42 an einer Anlageschulter 46 der Innenbohrung 38 an. Der Kolben 40 ist durch eine Steuerfeder 44 in Richtung dieser Anlageposition vorgespannt. Die Steuerfeder 44 ist ihrerseits an einer Abschlußschraube 46 abgestützt, die in den Ringmantel des Ventilschiebers 28 eingeschraubt ist und die gemeinsam mit der Ringmantelstirnfläche die Anlagefläche für den Federteller 36 (links in Fig. 6) bildet. Der Kolben 40 hat eine Verbindungsbohrung mit einer Axial-Sacklochbohrung und einer Radialdrosselbohrung, die am Außenumfang des Kolbens 40 mündet.

Im Bereich des Radialbundes 42 ist im Ringmantel des Ventilschiebers 28 eine Ausgleichsbohrung 52 ausgebildet, die in einen Steuerringraum 54 mündet, der über eine gestrichelt angedeutete Leitung mit einem Steueranschluß LS verbunden ist, so daß im Federraum ein dem Lastdruck entsprechender Steuerdruck anlegbar ist.

Im mittleren Bereich des Ventilschiebers 28 ist ein Ausgangsbohrungsstern 56 ausgebildet, dem zwei Ringräume 58 und 60 zugeordnet sind, die mit Verbindungskanälen 62 bzw. 64 verbunden sind. Diese Verbindungskanäle 62, 64 sind zu Eingangsanschlüssen der Drosseleinrichtungen 6 bzw. 8 geführt. Die Ringräume 58, 60 sind mit Anphasungen 66 versehen, die bei einer Axialverschiebung des Ventilschiebers 28 eine Feinaufsteuerung des Ausgangsbohrungssterns 56 ermöglichen. Die Axiallänge des Kolbens 40 ist derart gewählt, daß in der Nullposition (Fig. 6) der Ausgangsbohrungsstern 56 durch den rechten Endabschnitt des Kolbens 40 verschlossen ist. Die Radialdrosselbohrung 50 ist dann durch die Innenumfangswandung der Innenbohrung 38 verschlossen.

Im Bereich des inneren Endabschnitts der Innenbohrung 38 mündet ein Eingangsbohrungsstern 68, der in der Nullstellung durch einen Steg 70 verschlossen ist, der zwischen dem Pumpenkanal 14 und einem Pumpenzweigkanal 14a ausgebildet ist. Die beiden Pumpenkanäle 14, 14a verlaufen etwa in Radialrichtung zur Ventilbohrung 26. Die Innenbohrung 38 ist im Bereich des Steges 70 wiederum mit Anphasungen 66 zur Feinsteuerung versehen.

Durch den Eingangsbohrungsstern 68 und die Pumpenkanäle 14, 14a mit den entsprechenden Ringräumen wird eine verstellbare Meßblende ausgebildet, während durch den Kolben 40 und den Ausgangsbohrungsstern 56 eine Meßdrossel ausgebildet ist, über die der Systemdruck stromabwärts der Meßblende auf den Lastdruck in den Verbindungskanälen 62 bzw. 64 abgedrosselt wird. Durch das Hintereinanderschalten der Meßblende und der Meßdrossel ist gewährleistet, daß der Druckabfall über der Meßblende (Eingangsbohrungsstern 68) unabhängig vom Druck in den Verbindungskanälen 62, 64 konstant bleibt.

Wie bereits eingangs erwähnt sind die Federräume der Druckfedern 30, 32 mit den Steuerkanälen 22 bzw. 24 verbunden, so daß an den Stirnseiten der Steuerdruck herrscht.

Die beiden Drosseleinrichtungen 6, 8 haben einen identischen Aufbau, so daß der Einfachheit halber lediglich die in Fig. 6 dargestellte Drosseleinrichtung 6 beschrieben wird. Diese hat einen Hauptkegel 72, der über eine Rückschlagfeder 74 mit einem kegelförmigen Abschnitt gegen einen Ventilsitz 76 gedrückt ist, so daß in dieser Schließstellung die Verbindung vom Verbindungskanal 62 zu einem Arbeitskanal 78 unterbrochen ist.

Beim gezeigten Ausführungsbeispiel ist der Hauptkegel 72 mit einer Voröffnung 80 ausgebildet, die mit einer Kugel 82 verschlossen ist, die über die Rückschlagfeder 74 und einen Federteller gegen einen Voröffnungssitz gedrückt wird. In dem Federraum der Rückschlagfeder 74 mündet eine Drosselbohrung 84, die ihrerseits im Arbeitskanal 78 mündet. An dem in Fig. 6 rechten Endabschnitt ist ein nabenförmiger Vorsprung 86 ausgebildet, an dessen Außenumfang eine Ringnut 88 vorgesehen ist. Die Innenbohrung des nabenförmigen Vorsprungs 86 läuft konisch hin zur Voröffnung 80 zu.

Die Ringstirnfläche 90 des Vorsprungs 86 dient als Anlagefläche für einen Aufstoßkolben 92, der koaxial zum Hauptkegel 72 in einer Aufnahmebohrung 94 geführt ist. An seinem zum Hauptkegel 72 benachbarten Endabschnitt hat der Aufstoßkolben 92 einen Stößel 96, der in die Innenbohrung des nabenförmigen Vorsprungs 86 eintaucht und dessen Endabschnitt einen geringeren Durchmesser als die Voröffnung 80 hat, so daß der Stößel 96 auch in diese Voröffnung 80 eintauchen kann. Der Aufstoßkolben 92 ist über eine Feder 98 gegen die Stirnseite eines Ringraumes 100 der Aufnahmebohrung 94 vorgespannt. In dieser Anschlagposition besteht ein vorbestimmter Spalt zwischen der Ringstirnfläche 90 und der benachbarten Stirnfläche des Aufstoßkolbens 92, die größer ist als der Abstand des Endabschnittes des Stößels 96 zum Außenumfang der Kugel 82.

Am Außenumfang des Aufstoßkolbens 92 sind im Bereich eines in der Aufnahmebohrung 94 mündenden Tankkanals 102 mehrere über den Umfang verteilte Ausnehmungen 104 ausgebildet, über die bei einer Axialverschiebung des Aufstoßkolbens 92 der Tankkanal 102 mit dem Arbeitskanal 62 verbindbar ist, der über einen Ringraum 109 in der Aufnahmebohrung 94 mündet.

Im Aufstoßkolben 92 ist des weiteren eine Entlastungsbohrung ausgebildet, deren Axialabschnitt 108 in der - gemäß Fig. 6 - linken Stirnseite mündet und die über einen Radialabschnitt 110 zwischen dem Ringraum 106 des Tankkanals 102 und dem Ringraum 100 mündet (Grundstellung). Der Ringraum 106 des Tankkanals 102 ist wiederum mit Feinsteuerphasen 107 versehen. Der Axialabschnitt 108 mündet radial innerhalb der Ringstirnfläche in die Innenbohrung des Vorsprungs 86.

Wie Fig. 6 weiterhin entnehmbar ist, ist der linke Teil des Hauptkegels 72 in der Innenbohrung eines Verschlußstopfens 112 geführt, der in den linken Endabschnitt der Aufnahmebohrung für das Rückschlagventil eingeschraubt ist. Der Steuerkanal 22 ist von der linken Stirnseite des Ventilschiebers 28 bis in den Bereich des Verschlußstopfens 112 und von dort - wie gestrichelt angedeutet - bis zum Ringraum 100 verlängert, so daß in diesem der vom Pilotventil 10 aufgebrachte Steuerdruck einstellbar ist, der den Aufstoßkolben 92 entgegen der Kraft der Feder 98 beaufschlagt.

Wie aus Fig. 5 entnehmbar ist, ist der Tankkanal 102 zum Ringraum 106 der (rechten) Drosseleinrichtung 8 geführt und der Ringraum 100 über den gestrichelt angedeuteten Kanal mit dem Steuerkanal 24 verbunden, so daß der Aufstoßkolben 92 der Drosseleinrichtung 8 durch den durch das Pilotventil 12 aufgebrachten Steuerdruck in Richtung zum Hauptkegel 72 beaufschlagt ist, während der Aufstoßkolben 92 der Drosseleinrichtung 6 durch das Pilotventil 10 angesteuert wird.

Bei abgehobenem Hauptkegel 72 der Drosseleinrichtung 8 wird eine Verbindung zu einem Arbeitskanal 114 aufgesteuert, der zu einem Arbeitsanschluß B der Ventilanordnung geführt ist. Der Arbeitskanal 78 der Drosseleinrichtung 6 ist zu einem Arbeitsanschluß A geführt. Die beiden Anschlüsse A, B können an einen Verbraucher, beispielsweise an den Zylinderraum bzw. den Ringraum eines Hubzylinders 116 angeschlossen werden. Der Anschluß kann beispielsweise über Schlauchkupplungen erfolgen.

Zwischen dem Tankkanal 102 und dem Arbeitskanal 114 ist ein Verbindungskanal vorgesehen, in den ein herkömmliches Rückschlagventil 118 geschaltet ist, das bei einem übermäßigen Druckaufbau im Tank T eine Strömung vom Tankkanal 102 zum Arbeitskanal 114 ermöglicht, eine umgekehrte Durchströmung jedoch verhindert.

Die Funktion der in den Figuren 5 bis 6 dargestellten ventilanordnung soll im folgenden kurz erläutert werden.

Zum Ausfahren des Hubzylinders 116 muß der Zylinderraum über den Arbeitsanschluß A mit Hydraulikfluid versorgt werden. Dazu werden die Pilotventile 10 und 12 bestromt, so daß eine Steuerdruckdifferenz aufgebaut wird, deren Resultierende auf die in Fig. 5 rechte Stirnseite des Ventilschiebers 28 wirkt, so daß der Ventilschieber 28 gegen die Spannung der Druckfeder 30 nach links verschoben und der Eingangsbohrungsstern 68 aufgesteuert und Hydraulikfluid vom Pumpenkanal 14 in die Innenbohrung 38 eintreten kann. Der über das Pilotventil 10 aufgebrachte Steuerdruck ist beispielsweise so gering, daß die Drosseleinrichtung 6 in ihrer Rückschlagposition verbleibt. Durch den Pumpendruck wird der Kolben 40 von seiner Anschlagposition abgehoben, so daß der Ausgangsbohrungsstern 56 gegen die Kraft der Steuerfeder 44 und den Lastdruck aufgesteuert wird, bis sich ein Gleichgewicht zwischen der Kolbenfederseite und der Vorderseite (rechts in Fig. 5) einstellt. Das Hydraulikfluid kann nun von der Innenbohrung 38 durch den aufgesteuerten Ausgangsbohrungsstern 56 hindurch in den Verbindungskanal 62 eintreten, so daß der Hauptkegel 72 in Öffnungsrichtung - d.h. gegen die Kraft der Rückschlagfeder 74 - beaufschlagt wird. Bei hinreichendem Pumpendruck - oder genauer gesagt Ausgangsdruck an der Druckwaage - wird der Hauptkegel 72 von seinem Ventilsitz abgehoben, so daß das Hydraulikfluid durch den Arbeitskanal 78 zum Anschluß A und von dort in den Zylinderraum des Hubzylinders 116 strömen kann.

Durch den Druckaufbau im Zylinderraum wird Hydraulikfluid aus dem Ringraum des Hubzylinders 116 verdrängt, das über den Anschluß B und den Arbeitskanal 114 zur Drosseleinrichtung 8 geführt wird.

Der bei der Bestromung des Pilotventils 12 entstehende Steuerdruck herrscht auch im Ringraum 100 und somit an der Rückseite des Aufstoßkolbens 92, so daß dieser gegen die Kraft der Feder 98 (Fig. 6) in der Darstellung nach Fig. 5 nach rechts bewegt wird. Nach einem vorbestimmten Hub gelangt der Stößel 96 des Aufstoßkolbens 92 in Anlage an die Kugel 82, so daß diese gegen die Vorspannung der Rückschlagfeder 74 von ihrem Sitz abgehoben wird. Der Hauptkegel 72 liegt noch an seinem Sitz an. Durch die Axialbewegung des Aufstoßkolbens 92 wird der Radialabschnitt 110 der Ausgleichsbohrung durch die Steuerkante des Ringraumes 106 aufgesteuert, so daß in der Ausgleichsbohrung und in der Bohrung des Vorsprunges 86 der Tankdruck herrscht.

Da die Drosselbohrung 84 einen wesentlich geringeren Durchmesser als die Voröffnung 80 aufweist, baut sich der Druck im Federraum der Rückschlagfeder 74 ab, da durch die kleine Drosselbohrung 84 nicht schnell genug Hydraulikfluid aus dem Arbeitskanal 114 nachströmen kann. Dadurch wird die Federseite des Hauptkegels 72 entlastet. Aufgrund der Wirkung des Steuerdrucks wird der Aufstoßkolben 92 bei geöffneter Kugel 82 in seine Anschlagposition gegen den Vorsprung des Hauptkegels 72 bewegt, so daß letzterer vom Aufstoßkolben 92 mitgenommen und von seinem Ventilsitz abgehoben wird. In dieser Anschlagstellung liegen die Stirnseite des Aufstoßkolbens 92 und die Ringstirnfläche 90 des Hauptkegels 72 dichtend aneinander, so daß die Innenbohrung des Vorsprunges 86 gegenüber dem Außenumfang abgedichtet ist.

Durch die Axialverschiebung des Aufstoßkolbens 92 und des daran anliegenden Hauptkegels 72 wird der Arbeitskanal 114 über die Ringnut 88 mit dem Ringraum 109 verbunden, der wiederum über die Ausnehmungen 104 mit dem Tankkanal 102 verbunden ist, wobei letztere Verbindung durch die Ausnehmungen 104 aufgesteuert wird. Das Hydraulikfluid kann nun vom Arbeitskanal 114 in den Tankkanal 102 und damit zum Tankanschluß T zurückströmen.

Das Ausfahren des Hubzylinders 116 wird beendet, indem das Pilotventil 12 stromlos geschaltet wird, so daß beide Hauptkegel 72 der Drosseleinrichtung 6, 8 wieder in ihre Schließposition zurückbewegt werden und das Hydraulikfluid leckölfrei zwischen den Drosseleinrichtungen 6, 8 und dem Hubzylinder 116 eingespannt ist.

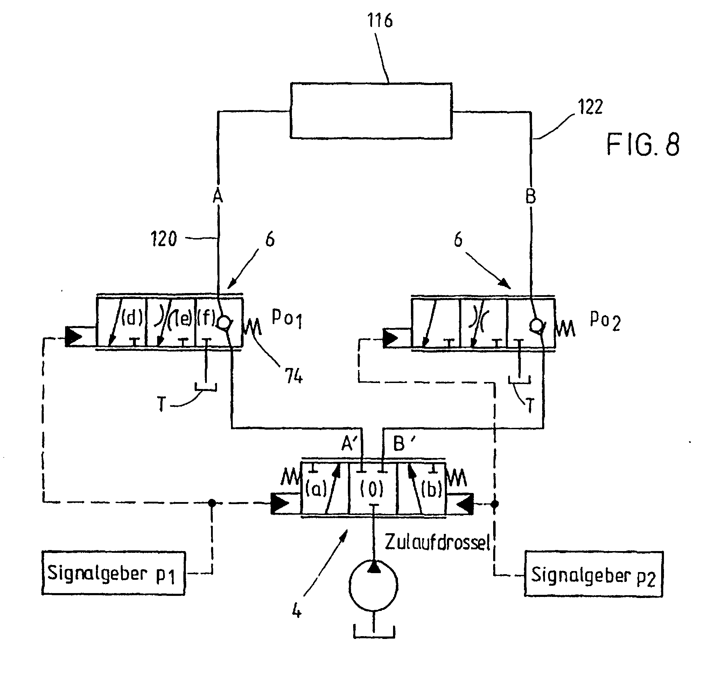

In Figur 7 ist das Grundschema der Ventilkonstruktion gemäß den Figuren 5 und 6 dargestellt, wobei die einzelnen Ventilelemente (Drosseleinrichtungen 6, Wegeventil 4) als stark vereinfachte Symbole dargestellt sind, die in vielfältiger Weise ausgeführt werden können.

Das Wegeventil 4 ist mit zwei Ausgangsanschlüssen A, B und einem Pumpenanschloß P ausgeführt, an den eine Hydraulikpumpe 124 angeschlossen ist. An die beiden Arbeitsanschlüsse A, B sind zum Verbraucher 116 führende Arbeitsleitungen 120 bzw. 122 angeschlossen, in denen jeweils eine der identisch aufgebauten Drosseleinrichtungen 6 angeordnet sind. Wie in Figur 7 angedeutet ist, wird durch jede der Drosseleinrichtungen 6 ein Rückschlagventil realisiert, das eine zusätzliche Dosierkante zur Einstellung des Hydraulikölvolumenstromes hat. Bei dem in den Figuren 5 und 6 dargestellten konkreten Ausführungsbeispiel wird das Rückschlagventil praktisch durch den Hauptkegel 72 gebildet und die Dosierkante durch Zusammenwirken des Aufstoßkolbens 92 mit dem Hauptkegel 72. Die mechanische Kopplung des Aufstoßkolbens 92 mit dem Hauptkegel 72 ist in Figur 7 schematisch angedeutet.

An die in Figur 7 linke Steuerseite des als Proportionalventil ausgeführten Wegeventils 4 ist ein Steuersignal anlegbar, das auch an die Steuerseite des durch die Rückschlagfeder 74 in seine Rückschlagposition vorgespannte Drosseleinrichtung 6 anlegbar ist. Entsprechend wird an die andere Steuerseite des Wegeventils 4 ein zweites Steuersignal angelegt, das auch zur Steuerseite der ablaufseitigen Drosseleinrichtung 6 geführt ist. Die Steuersignale können beispielsweise Vorsteuerdrücke p1, p2 sein. Selbstverständlich können anstelle von Steuerdrücken auch elektrische Signale verwendet werden.

Bei Anlegen einer Druckdifferenz p2 - p1 wird der Ventilschieber des Wegeventils 4 aus der mit (0) gekennzeichneten Mittel-Sperrstellung in eine der mit (b) bezeichneten Durchflußstellungen gebracht, in denen die Anschlüsse P und A miteinander verbunden sind. Der Steuerdruck p1 ist dabei so gewählt, daß die Drosseleinrichtung 6 in der in Figur 7 gezeigten Rückschlagposition verbleibt. Durch den höheren Signaldruck p2 wird die Drosseleinrichtung 6 in der Arbeitsleitung 122 (ablaufseitig) aus der Rückschlagposition in die Drosselposition gebracht, in der durch die zusätzliche Dosierkante eine Drosselung des ablaufenden Volumenstromes erfolgen kann. Bei einfach wirkenden Verbrauchern 116 ist beispielsweise eine Steuerung des Volumenstromes in der Ablaufleitung-Arbeitsleitung 122 nicht erforderlich, so daß nach dem erfindungsgemäßen Verfahren der Steuerdruck p2 derart gewählt wird, daß die ablaufseitige Drosseleinrichtung 6 in eine Durchflußstellung mit maximalem Öffnungsquerschnitt gebracht wird und somit die Druckverluste in der Ablauf-Arbeitsleitung 122 auf ein Minimum reduziert sind.

Das Verfahren zur Ansteuerung der erfindungsgemäßen Ventilanordnung wird im folgenden noch näher erläutert.

In Figur 8 ist die Ventillogik eines weiteren Ausführungsbeispieles einer erfindungsgemäßen Ventilanordnung dargestellt. Diese Ventilanordnung unterscheidet sich von der in Figur 7 dargestellten Ventilanordnung lediglich im prinzipiellen Aufbau der Drosseleinrichtungen 6. Bei dem in Figur 7 dargestellten Ausführungsbeispiel war jede Drosseleinrichtung 6 durch eine Rückschlagventilanordnung und eine die zusätzliche Dosierkante realisierende Ventilanordnung gebildet, die miteinander mechanisch gekoppelt waren. Bei dem in Figur 8 dargestellten Ausführungsbeispiel wird die Drosseleinrichtung 6 durch ein stetig verstellbares Wegeventil realisiert, das in einer mit (f) gekennzeichneten Endposition als Rückschlagventil wirkt, das eine Rückströmung vom Verbraucher zum Wegeventil 4 verhindert. In der mit (e) gekennzeichneten Durchflußstellung erfolgt eine Drosselung des Hydraulikölvolumenstromes in den Arbeitsleitungen 120 bzw. 122 und in der mit (d) bezeichneten Endposition ist der Ventilschieber der Drosseleinrichtung 6 in einer Stellung, in der der Öffnungsquerschnitt einen Maximalwert annimmt, so daß das Hydrauliköl mit minimalen Energieverlusten vom Verbraucher 116 zum Tank T rückströmen kann. Die sonstigen Bauelemente der in Figur 8 dargestellten Ventilanordnung entsprechen der in Figur 7 dargestellten Konstrukion, so daß auf eine Beschreibung der weiteren Bauelemente verzichtet werden kann. Die beiden Drosseleinrichtungen 6 sind durch die Rückschlagfeder 74 in ihre Rückschlagstellung vorgespannt. Sobald durch den Steuerdruck p1, p2 auf die Steuerseite der Drosseleinrichtungen 6 eine Kraft aufgebracht wird, die die Rückschlagfederkraft übersteigt, wird der Ventilschieber der Drosseleinrichtungen in seine mit (d) und (e) gekennzeichneten Durchflußstellungen gebracht, die eine Rückströmung vom Verbraucher 116 zum Tank T ermöglichen.

Anhand der folgenden Figuren werden nunmehr mehrere Verfahren zur Ansteuerung der vorbeschriebenen Ventilanordnungen erläutert.

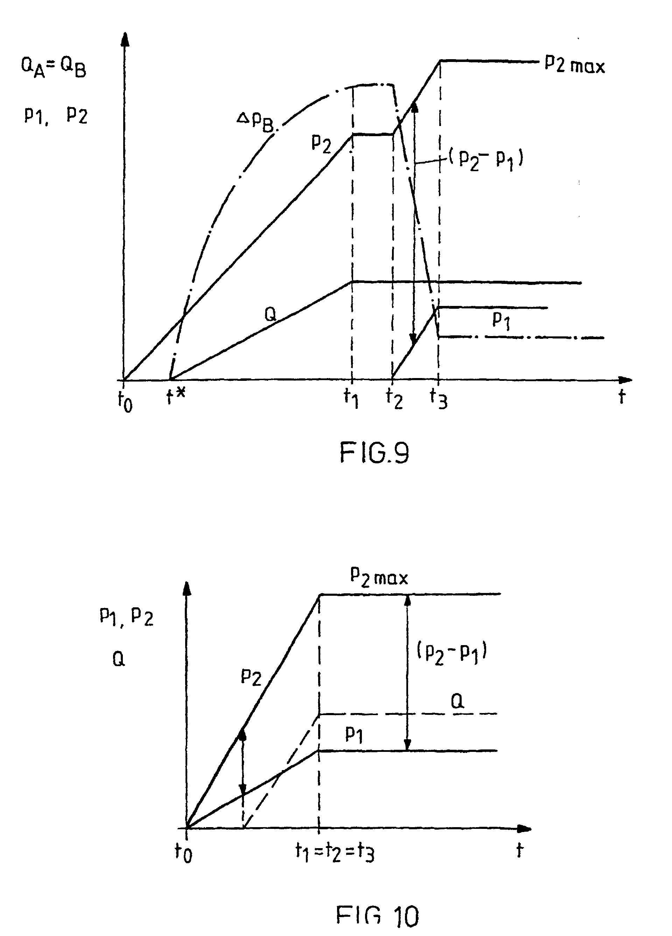

Figur 9 zeigt ein Diagramm, in dem die zulauf- und ablaufseitigen Volumenströme Q_{A} und Q_{B} sowie die an den Steuerseiten des Wegeventils 4 und an die Drosseleinrichtungen 6 angelegten Steuerdrücke p1, p2 in Abhängigkeit von der Zeit t dargestellt sind. Da die Volumenströme Q_{A} und Q_{B} gleich sind, werden diese in dem Diagramm gemäß Figur 9 der Einfachheit halber mit Q zusammengefaßt. Gemäß dem in Figur 9 dargestellten Steuerverfahren wird der Steuerdruck p2 für die ablaufseitige Drosseleinrichtung 6 in der Arbeitsleitung 122 zunächst innerhalb eines Zeitintervalls (t₁-t₀> stetig erhöht. Durch den angelegten Signaldruck p2 wird der Ventilschieber des Wegeventils 4 - in eine der mit (b) gekennzeichneten Durchflußstellungen gebracht, in der der Pumpenanschluß P mit dem Arbeitsanschluß A verbunden ist, so daß Hydrauliköl durch die Arbeitsleitung 120 zur zulaufseitigen Drosseleinrichtung 6 geführt wird. Da der Signaldruck p1 in diesem Zeitintervall noch Null ist, verbleibt die Drosseleinrichtung 6 in ihrer Rückschlagstellung. Durch den angelegten Signaldruck p2 wird die Vorspannung der Rückschlagfeder 74 der in der Arbeitsleitung 122 angeordneten ablaufseitigen Drosseleinrichtung 6 überwunden, so daß diese in eine ihrer Durchflußstellungen gebracht wird, in der eine Drosselung des Ablauf-Volumenstromes erfolgt.

Dementsprechend steigen der Hydrauliköl-Volumenstrom Q und der Druckverlust Δp_{B} an der ablaufseitigen Drosseleinrichtung 6 an, wobei dieser Anstieg erst nach einer Zeit t^{*} erfolgt, in der der Steuerdruck p2 einen Wert erreicht hat, bei dem die Kraft der Vorspannfeder des Wegeventils 4 überwunden werden kann, um den Wegeventilschieber zu verschieben.

Nach der Zeit t₁ wird der Steuerdruck p2 zunächst auf konstantem Niveau gehalten, so daß sich ein gewünschter Volumenstrom Q einstellt. Entsprechend erfolgt in dem Zeitintervall t₂ - t₁ auch keine weitere Erhöhung des Druckverlustes Δp_{B}. Nach Einstellung eines konstanten Volumenstromes Q werden dann beide Steuerdrücke p2 und p1 mit einem identischen Druckgradienten erhöht, so daß die Steuerdruckdifferenz (p2 - p1) unverändert bleibt. Diese Erhöhung der Steuerdrücke erfolgt, bis der Steuerdruck p2 für die ablaufseitige Drosseleinrichtung 6 einen Maximalwert (P₂ₘₐₓ) erreicht hat. Bei diesem Steuerdruck ist der Öffnungsquerschnitt der Drosseleinrichtung 6 (Bild 7 oder Bild 8) maximal, so daß entsprechend der Druckverlust Δp_{B} auf einen Minimalwert absinkt. Dieser Minimalwert des Druckverlustes Δp_{B} wird nach einer Zeit t₃ erreicht, ab der die beiden Steuerdrücke p2 und p1 auf einem konstanten Niveau gehalten werden.

D.h., nach Ablauf der Zeit t₃ ist durch Anlegen der Druckdifferenz p2 - p1 der Volumenstrom Q über das Wegeventil 4 auf den gewünschten Wert eingestellt, die zulaufseitige Drosseleinrichtung 6 befindet sich in der Rückschlagposition, die eine Rückströmung des Hydrauliköls vom Verbraucher 116 zum Wegeventil 4 verhindert und die ablaufseitige Drosseleinrichtung 6 ist vollständig geöffnet, so daß der Druckverlust Δp_{B} auf einen Minimalwert reduziert ist. Dabei ist jedoch darauf zu achten, daß der Signaldruck p1 für die zulaufseitige Drosseleinrichtung 6 auf einen Wert eingestellt wird, daß die an der Steuerseite wirkende Kraft kleiner ist als diejenige der Rückschlagfeder 74, so daß die zulaufseitige Drosseleinrichtung 6 in ihrer Rückschlagposition verbleibt.

Das in Figur 9 dargestellte Steuerverfahren ist für alle vorbeschriebenen Konstruktionsvarianten geeignet.

Bei den in den Figuren 5 bis 7 dargestellten Varianten, bei denen die Drosseleinrichtungen 6 eine Rückschlagventilanordnung und eine zusätzliche, konstruktiv getrennte Dosierkante 92 aufweisen, die beispielsweise durch den Hauptkegel 62 und den Aufstoßkolben 92 realisiert werden, kann es vorkommen, daß bei Überschreiten eines Signaldruckes p1 die Dosierkante der zulaufseitigen Drosseleinrichtung 6 die Verbindung zum Tank T aufsteuert, so daß ein "Kurzschluß" erfolgt, in dem sowohl der Arbeitsanschluß A des Wegeventils als auch der Verbraucher mit dem Tank T verbunden sind. Ein derartiger Kurzschluß ist durch das in Figur 9 dargestellte Steuerverfahren ausgeschlossen, da dort der Signaldruck für die ablaufseitige Drosseleinrichtung 6 zunächst auf einen hohen Wert erhöht wird, bevor der Steuerdruck p1 für die zulaufseitige Drosseleinrichtung 6 ansteigt.

In den folgenden Figuren sind Steuerverfahren dargestellt, bei denen ein derartiger Kurzschluß nicht ausgeschlossen werden kann, so daß diese Steuerverfahren besonders für Ventilanordnungen geeignet sind, die den in Figur 8 dargestellten Aufbau zeigen.

Gemäß Figur 10 werden bei dem zweiten alternativen Steuerverfahren beide Steuerdrücke p2 und p1 gleichzeitig und mit unterschiedlichen Druckgradienten erhöht, so daß der Steuerdruck p2 für die ablaufseitige Drosseleinrichtung 6 steiler ansteigt. Bei Erreichen einer Steuerdruckdifferenz wird die Kraft der Druckfeder 30 des Wegeventils 4 überwunden, so daß dieses entsprechend in eine der Durchflußstellungen b gebracht wird, so daß dann entsprechend der Hydraulikölvolumenstrom ansteigt. Die Steuerdruckgradienten sind derart gewählt, daß der Steuerdruck p2 dann einen Maximalwert erreicht, wenn die vorbestimmte Steuerdruckdifferenz (p2-p1) eingestellt ist, die zur Einstellung des gewünschten Volumenstromes Q erforderlich ist. D.h., die Druckgradienten bei dem in Figur 10 gezeigten Verfahren werden vorzugsweise so gewählt, daß der Steuerdruck für die zulaufseitige Drosseleinrichtung 6 und der Steuerdruck p2 für die ablaufseitige Drosseleinrichtung 6 stets einen Maximalwert erreicht, so daß die Ablaufdrossel auf einen maximalen Durchströmungsquerschnitt eingestellt ist. Nach Einstellung des Maximalsteuerdruckes p2 und der gewünschten Steuerdruckdifferenz (p2-p1) werden beide Steuerdrücke p1, p2 auf konstantem Niveau gehalten, so daß auch der Volumenstrom Q konstant auf dem vorbestimmten Wert verbleibt.

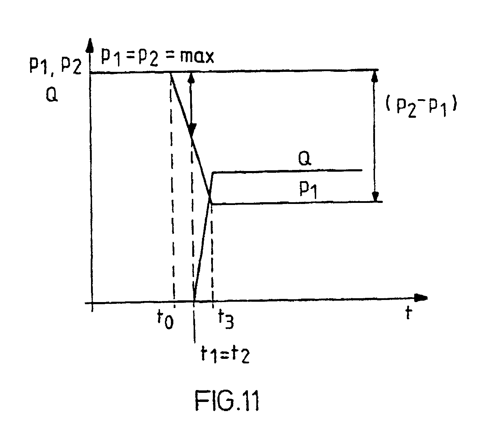

In Figur 11 ist eine dritte Alternative eines erfindungsgemäßen Steuerverfahrens dargestellt. Demgemäß werden beide Steuerdrücke p1 und p2 zu Beginn der Steuerung auf einen Maximalwert eingestellt, so daß an beiden Steuerseiten des Wegeventils 4 die gleichen Steuerdrücke anliegen - demgemäß ist die Steuerdruckdifferenz zu Beginn der Steuerung gleich Null. Durch diese Maßnahme verbleibt das Wegeventil 4 in seiner mit (0) bezeichneten Sperrstellung und sowohl die zulaufseitige als auch die ablaufseitige Drosseleinrichtung 6 werden in eine Stellung gebracht, in der ein maximaler Öffnungsquerschnitt vorliegt. Nach einer Zeit t₀ wird der Steuerdruck p1 für die zulaufseitige Drosseleinrichtung 6 abgesenkt und der auf den Maximalwert eingestellte Steuerdruck p2 aufrechterhalten. Der Steuerdruck p1 wird solange abgesenkt, bis sich die gewünschte Steuerdruckdifferenz p2 - p1 einstellt. Durch das Absenken des Steuerdruckes p1 wird nach einer Zeit t₁ eine Steuerdruckdifferenz erreicht, die hinreichend ist, um die Kraft der Druckfeder 30 des Wegeventils 4 zu überwinden, so daß dieses in seine mit (b) gekennzeichneten Durchflußstellungen gebracht wird und der Volumenstrom Q zum Verbraucher 116 ansteigt. Gleichzeitig wird durch den absinkenden Steuerdruck p1 der Öffnungsquerschnitt der zulaufseitigen Drosseleinrichtung 6 zugesteuert, so daß nach Erreichen der vorbestimmten Steuerdruckdifferenz die Drosseleinrichtung 6 durch die Kraft der Rückschlagfeder 74 in ihre Rückschlagstellung gebracht werden kann. Nach Erreichen der vorbestimmten Steuerdruckdifferenz (p2-p1) werden beide Steuerdrücke p1, p2 konstant gehalten, so daß auch der Hydraulikölvolumenstrom Q auf einem konstanten Niveau verbleibt.

Alle vorbeschriebenen Verfahren haben gemeinsam, daß die ablaufseitige Drosseleinrichtung 6 nach Einstellung der vorbestimmten Steuerdruckdifferenz so weit geöffnet ist, daß die Druckverluste bei der Rückströmung des Hydrauliköls vom Verbraucher über die ablaufseitige Drosseleinrichtung 6 zum Tank T hin vermindert sind. Durch diese Maßnahme kann auf die Verwendung von zusätzlichen Einrichtungen, wie beispielsweise drucklosen Tankrückführungen verzichtet werden, so daß der konstruktive Aufbau des Hydrauliksystems gegenüber herkömmlichen Lösungen minimal ist.

Ein weiterer Vorteil besteht darin, daß die erfindungsgemäße Ventilanordnung sehr flexibel einsetzbar ist, da bei minimalem Energieverlust beispielsweise Motoren mit einer und zwei Drehrichtungen ansteuerbar sind.

Die Erfindung läßt sich besonders vorteilhaft bei Nutzfahrzeugen, wie beispielsweise Ackerschleppern einsetzen, wobei sich folgende Anwendungen anbieten:
- Ablaufsteuerung für ziehende Lasten;
- Hub eines einfach wirkenden Zylinders ohne Ablaufsteuerung der tankentlasteten Zylinderseite;
- Motorbetrieb mit Drehrichtung rechts und
- Motorbetrieb mit Drehrichtung links,
wobei der Zulauf-Volumenstrom und die Öffnung der Ablaufdrossel durch geeignete Stellelemente durch den Bediener einstellbar sind.

Zur Einstellung der Wirkrichtung und zur Vorbestimmung des Volumenstromes (Menge) könnten beispielsweise getrennte Stellelemente wie beispielsweise ein Schalter und Potentiometer gewählt werden, oder beide Funktionen könnten auch in einem Ein-Hebel-Element, wie beispielsweise einem Joystick zusammengefaßt werden. Der gewünschte Modus für die Ablaufsteuerung läßt sich beispielsweise über Schalter (Einzel- oder Mehrstellungsschalter) oder über eine geeignete Menüsteuerung an einem Display einstellen, so daß der Bediener auf einfache Weise die gewünschte Zulauf- und Ablaufsteuerung einstellen kann.

Offenbart ist eine Ventilanordnung zur Ansteuerung eines Verbrauchers und ein Verfahren zur Ansteuerung der Ventilanordnung, bei denen eine Zulauf-Drosseleinrichtung und eine Ablauf-Drosseleinrichtung. unabhängig voneinander ansteuerbar sind. Bei einfach wirkenden Verbrauchern wird die Ablauf-Drosseleinrichtung derart angesteuert, daß bei Erreichen des gewünschten Hydrauliköl-Volumenstromes der Öffnungsquerschnitt der Ablaufdrossel maximal ist, so daß die Energieverluste in der Ablaufleitung auf ein Minimum reduziert sind.

## Patentansprüche

1. Ventilanordnung zur Ansteuerung eines Verbrauchers, mit einem als Zulaufdrossel wirkenden stetig verstellbaren Wegeventil (4), über das ein Pumpenanschluß mit Verbraucheranschlüssen (A, B) verbindbar ist, wobei der Verbraucher (116) über Arbeitsleitungen (120, 122) an das Wegeventil (4) angeschlossen und in jeder Arbeitsleitung (120, 122) eine Drosseleinrichtung (6) angeordnet ist, über die der Ablaufvolumenstrom des Hydrauliköls vom Verbraucher (116) einstellbar ist, **dadurch gekennzeichnet, daß** jeweils eine Steuerseite der Drosseleinrichtungen (6) und eine Steuerseite des Wegeventils (4) über einen Steuerkanal (22, 24) mit jeweils einer Steuereinheit (10, 12) verbunden sind, wobei mittels der beiden Steuereinheiten (10, 12) die Steuerdrücke in den beiden Steuerkanälen (22, 24) derart unabhängig voneinander einstellbar sind, daß beim Einstellen des Zulaufvolumenstroms beide Steuerdrücke größer als null sind und die ablaufseitige Drosseleinrichtung (6) unabhängig von einer Ventilschieberstellung des Wegeventils (4) vollständig aufsteuerbar ist.

2. Ventilanordnung nach Patentanspruch 1, **dadurch gekennzeichnet, daß** die jeweilige Drossleinrichtung (6) in eine Schaltstellung, in der sie als Rückschlagventil wirkt und in weitere Stellungen mit variablem Durchfluß bringbar ist.

3. Ventilanordnung nach Patentanspruch 2, .**dadurch gekennzeichnet, daß** eine Steuerseite der jeweiligen Drosseleinrichtung (6) und eine Steuerseite des Wegeventiles (4) mit dem gleichen Steuersignal (p1, p2) beaufschlagbar sind.

4. Ventilanordnung nach einem der vorhergehenden Patentansprüche, **dadurch gekennzeichnet, daß** die Drosseleinrichtungen (6) eine Hydraulikölströmung hin zum Verbraucher (116) ermöglichenden und gegen einen Ventilsitz vorgespannten Hauptkegel (72) sowie einen Aufstoßkolben (92) haben, der mittels des Steuerdruckes (p2) in eine Anlageposition an den Hauptkegel (72) bringbar ist, um die Ablaufdrosselung zu bewirken.

5. Ventilanordnung nach einem der Patentansprüche 1 bis 3, **dadurch gekennzeichnet, daß** die Drosseleinrichtungen (6) als Drossel-Wegeventil mit einer Rückschlagschaltstellung (f) und mehreren stetig verstellbaren Druchflußstellungen (d, e) ausgeführt sind

6. Ventilanordnung nach einem der vorhergehenden Patentansprüche, **dadurch gekennzeichnet, daß** das Wegeventil (4) ein stetig verstellbares 3-Wegeventil ist, mit einer Sperrstellung (0) und zulaufstellungen (a, b), in denen der Pumpenanschluß (P) mit einer der beiden Arbeitsleitungen (120, 122) verbunden ist.

7. Verfahren zur Ansteuerung einer Ventilanordnung, insbesondere zur Ansteuerung einer Ventilanordnung gemäß einem der vorhergehenden Patentansprüche, mit einem als Zulaufdrossel wirkenden Wegeventil (4), über das eine Pumpenleitung mit einer Arbeitsleitung (120) eines Verbrauchers (116) verbunden wird, und mit Drosseleinrichtungen (6) mit einem Rückschlagventil und einer Dosiersteuerkante in den Arbeitsleitungen (120, 122) zur Drosselung des Arbeitsvolumenstroms vom Verbraucher (116), mit den Schritten:
a) Einstellen des Zulaufvolumenstroms zum Verbraucher (116) durch Ansteuern des Wegeventils (4) mittels Einstellen beider an den Steuerseiten des Wegeventils (4) anliegenden Steuerdrücken über zwei Steuereinheiten (10, 12), wonach sich die zulaufseitige Drosseleinrichtung (6) in der Rückschlagstellung befindet, und
b) vollständiges Aufsteuern der ablaufseitigen Drosseleinrichtung (6) durch Erhöhung ihres Steuerdrucks auf einen Maximalwert,
wobei Schritt a) vor oder nach Schritt b) durchgeführt werden kann.

8. Verfahren nach Patentanspruch 7 mit den Schritten:
- Anlegen einer Steuerdruckdifferenz (p1 - p2) an die Steuerseiten des Wegeventiles (4) und
- Anlegen der die Steuerdruckdifferenz (p1 - p2) bildenden Steuerdrücke (p1, p2) an die Steuerseite der ablauf- bzw. zulaufseitigen Drosseleinrichtung (6),
wobei die Steuerdrücke (p1, p2) derart gewählt werden, daß die in der zulaufseitigen Arbeitsleitung (120) angeordnete Drosseleinrichtung (6) in die Rückschlagstellung und die ablaufseitige Drosseleinrichtung (6) in die Stellung mit maximalem Öffnungsquerschnitt gebracht wird.

9. Verfahren nach Patentanspruch 8 mit den Schritten:
- Erhöhen des Steuerdrucks (p2) für die ablaufseitige Drosseleinrichtung (6) bei gleichbleibendem Steuerdruck (p1) für die zulaufseitige Drosseleinrichtung (6) bis sich die vorbestimmte Steuerdruckdifferenz (p2 - p1) am Wegeventil (4) einstellt,
- Erhöhen beider Steuerdürcke (p1, p2) unter Beibehaltung der Steuerdruckdifferenz (p2 - p1) bis die ablaufseitige Drosseleinrichtung (6) vollständig aufgesteuert ist.

10. Verfahren nach Patentanspruch 8 mit den Schritten:
- Erhöhen des Steuerdrucks (p2) für die ablaufseitige Drosseleinrichtung (6) mit einem größeren Druckgradienten als derjenige für die zulaufseitige Drosseleinrichtung (6) bis sich die Steuerdruckdifferenz (p2 - p1) einstellt und die ablaufseitige Drosseleinrichtung (6) vollständig aufgesteuert ist.

11. Verfahren nach Patentanspruch 8 mit den Schritten:
- Einstellen eines maximalen Steuerdruckes (p1, p2), so daß beide Drosseleinrichtungen (6) vollständig aufgesteuert werden,
- Absenken des Steuerdruckes (p1) für die zulaufseitige Drosseleinrichtung (6) und Beibehalten des anderen Steuerdruckes (p2) bis sich die vorbestimmte Steuerdruckdifferenz (p2 - p1) am Wegeventil (4) einstellt.

## Claims

1. A valve assembly for actuation of a consumer, including a continuously adjustable directional control valve (4) acting as a supply throttle whereby a pump port may be connected to consumer ports (A, B), wherein the consumer (116) is connected through work conduits (120, 122) to the directional control valve (4), and in each work conduit (120, 122) a throttle device (6) is arranged whereby the drain volumetric flow of the hydraulic oil from the consumer (116) may be adjusted, **characterised in that** one control side of the throttle device (6) and one side of the directional control valve (4) may be connected to one respective control unit (10, 12) via a control passage (22, 24), wherein the control pressures in the two control passages (22, 24) may be adjusted independently of each other with the aid of the two control units (10, 12) such that upon adjusting the supply volume flow both control pressures are greater than zero, and the drain-side throttle device (6) may be controlled open entirely independent of a spool position of the directional control valve (4).

2. A valve assembly according to claim 1, **characterised in that** the respective throttle device (6) is capable of being taken into a switching position in which it acts as a non-return valve, and into further positions with variable through-flow.

3. A valve assembly according to claim 2, **characterised in that** an equivalent control signal (p1, p2) may be applied to a control side of the respective throttle device (6) and a control side of the directional control valve (4).

4. A valve assembly in accordance with any one of the preceding claims, **characterised in that** the throttle devices (6) include a main poppet (72) permitting flow of hydraulic oil to the consumer (116) and biased against a valve seat, as well as a push-open piston (92) which, by means of the control pressure (p2), is capable of being taken into a contact position at the poppet (72) in order to bring about drain throttling.

5. A valve assembly in accordance with any one of claims 1 to 3, **characterised in that** the throttle devices (6) are designed as throttle directional control valves including a non-return switching position (f) and several continuously adjustable flow positions (d, e).

6. A valve assembly in accordance with any one of the preceding claims, **characterised in that** the directional control valve (4) is a continuously adjustable 3-way directional control valve including a cut-off position (0) and supply positions (a, b) in which the pump port (P) is connected to one of the two work conduits (120, 122).

7. Method for actuation of a valve assembly, in particular for actuation of a valve assembly in accordance with any one of the preceding claims, including a directional control valve (4) acting as a supply throttle through which a pump conduit is connected to a work conduit (120) of a consumer (116), and comprising throttle devices (6) including a non-return valve and a metering control land positioned in the work conduits (120, 122) for throttling the volumetric drain flow from the consumer, comprising the steps:
a) adjusting the volumetric supply flow to the consumer (116) by actuating the directional control valve (4) by adjusting both control pressures applied to the control sides of the directional control valve (4) via two control units (10, 12), after which the supply-side throttle device (6) is in the check position, and
b) controlling the drain-side throttle device (6) entirely open by raising its control pressure to a maximum value, wherein it is possible to perform step a) before or after step b).

8. Method according to claim 7, comprising the steps:
- applying a control pressure difference (p1 - p2) to the control sides of the directional control valve (4) and
- applying the control pressures (p1, p2) forming the control pressure difference (p1 - p2) to the control side of the drain and supply-side throttle devices (6), respectively,
wherein the control pressures (p1, p2) are chosen such that the throttle device (6) arranged in the supply-side work conduit (120) is taken into the check position, and the drain-side throttle device (6) is taken into the position of maximum open cross-section.

9. Method according to claim 8, comprising the steps:
- increasing the control pressure (p2) for the drain-side throttle device (6) at constant control pressure (p1) for the supply-side throttle device (6) until the predetermined control pressure difference (p2 - p1) is established at the directional control valve (4),
- increasing both control pressures (p1, p2) while retaining the control pressure difference (p2 - p1) until the drain-side throttle device (6) is controlled entirely open.

10. Method according to claim 8, comprising the steps:
- increasing the control pressure (p2) for the drain-side throttle device (6) with a higher pressure gradient than the one for the supply-side throttle device (6) until the control pressure difference (p2 - p1) is established and the drain-side throttle device (6) is controlled entirely open.

11. Method according to claim 8, comprising the steps:
- adjusting a maximum control pressure (p1, p2), so that both throttle devices (6) are controlled entirely open,
- lowering the control pressure (p1) for the supply-side throttle device (6) and retaining the other control pressure (p2) until the predetermined control pressure difference (p2 - p1) is established at the directional control valve (4).

## Revendications

1. Système de soupapes pour la commande d'un consommateur, avec un distributeur réglable (4) agissant comme étranglement d'alimentation, par lequel on peut relier un raccord de pompe à des raccords de consommateurs (A, B), dans lequel le consommateur (116) est raccordé au distributeur (4) par des conduites de travail (120, 122) et dans chaque conduite de travail (120, 122) est disposé un dispositif d'étranglement (6), par lequel le débit volumique de l'huile hydraulique de retour du consommateur (116) est réglable, **caractérisé en ce qu'**un côté de commande respectivement des dispositifs d'étranglement (6) et un côté de commande du distributeur (4) sont reliés par un canal de commande (22, 24) à une unité de commande (10, 12) respectivement, de sorte que, au moyen des deux unités de commande (10, 12), les pressions de commande dans les deux canaux de commande (22, 24) sont réglables indépendamment l'une de l'autre de telle sorte que, lors du réglage du débit d'alimentation, les deux pressions de commande sont plus grandes que zéro et le dispositif d'étranglement (6) côté retour peut être commandé pour une ouverture complète indépendamment d'une position du tiroir de soupape du distributeur (4).

2. Système de soupapes selon la revendication 1, **caractérisé en ce que** le dispositif d'étranglement (6) correspondant peut être amené dans une position de commande dans laquelle il agit comme clapet antiretour, et dans d'autres position avec un débit variable.

3. Système de soupapes selon la revendication 2, **caractérisé en ce qu'**un côté de commande du dispositif d'étranglement (6) correspondant et un côté de commande du distributeur (4) peuvent être soumis au même signal de commande (p1, p2).

4. Système de soupapes selon l'une quelconque des revendications précédentes, **caractérisé en ce que** les dispositifs d'étranglement (6) présentent un cône principal (72) rendant possible la circulation d'un courant d'huile hydraulique vers le consommateur (116) et préchargé contre un siège de soupape, ainsi qu'un tiroir d'ouverture (92), qui peut être amené dans une position de contact sur le cône principal (72) au moyen de la pression de commande (p2), pour réaliser l'étranglement sur retour.

5. Système de soupapes selon l'une quelconque des revendications 1 à 3, **caractérisé en ce que** les dispositifs d'étranglement (6) sont réalisés comme distributeurs à étranglement avec une position de commande comme clapet antiretour (f) et plusieurs positions de débit réglables en continu(d, e).

6. Système de soupapes selon l'une quelconque des revendications précédentes, **caractérisé en ce que** le distributeur (4) est un distributeur à 3 voies réglable en continu, avec une position fermée (0) et des positions d'alimentation (a, b), dans lesquelles le raccord de la pompe (P) est relié à l'une des deux conduites de travail (120, 122).

7. Procédé de commande d'un système de soupapes, en particulier pour la commande d'un système de soupapes selon l'une quelconque des revendications précédentes, avec un distributeur (4) agissant comme étranglement d'alimentation, dans lequel une conduite de pompe est reliée à une conduite de travail (120) d'un consommateur (116), et avec des dispositifs d'étranglement (6) avec un clapet antiretour et une arête de commande du dosage dans la conduite de travail (120, 122) pour l'étranglement du débit de travail en provenance du consommateur (116), comprenant les étapes :
a) réglage du débit d'alimentation vers le consommateur (116) par commande du distributeur (4) au moyen du réglage par deux unités de commande (10, 12) des deux pressions de commande agissant sur les côtés de commande du distributeur (4), de sorte que le dispositif d'étranglement (6) du côté alimentation se trouve dans la position de clapet antiretour, et
b) commande d'ouverture complète du dispositif d'étranglement (6) du côté retour par augmentation de sa pression de commande à une valeur maximale,
l'étape a) pouvant être effectuée avant ou après l'étape b).

8. Procédé selon la revendication 7, comprenant les étapes :
- création d'une différence de pression de commande (p1 - p2) aux côtés de commande du distributeur (4) et
- création des pressions de commande (p1, p2) formant la différence de pression de commande (p1 - p2) aux côtés de commande des dispositifs d'étranglement (6) côté alimentation, respectivement côté retour, de sorte que les pressions de commande (p1, p2) sont choisies telles que le dispositif d'étranglement (6) disposé dans la conduite de travail (120) côté alimentation est amené dans la position de clapet antiretour et que le dispositif d'étranglement (6) côté retour est amené dans la position de section d'ouverture maximale.

9. Procédé selon la revendication 8, comprenant les étapes :
- augmentation de la pression de commande (p2) pour le dispositif d'étranglement (6) côté retour pour une pression de commande (p1) constante pour le dispositif d'étranglement (6) côté alimentation, jusqu'à ce qu'il s'établisse la différence de pression de commande prédéterminée (p2 - p1) au niveau du distributeur (4),
- augmentation des deux pressions de commande (p1, p2) moyennant la conservation de la différence de pression de commande (p2 - p1), jusqu'à ce que le dispositif d'étranglement (6) côté retour soit commandé à la complète ouverture.

10. Procédé selon la revendication 8, comprenant les étapes :
- augmentation de la pression de commande (p2) pour le dispositif d'étranglement (6) côté retour avec un gradient de pression plus grand que celui pour le dispositif d'étranglement (6) côté alimentation, jusqu'à ce que la différence de pression de commande (p2 - p1) s'établisse et que le dispositif d'étranglement (6) côté retour soit commandé à la complète ouverture.

11. Procédé selon la revendication 8, comprenant les étapes :
- établissement d'une pression de commande (p1, p2) maximale, de telle sorte que les deux dispositifs d'étranglement (6) soient commandés à la complète ouverture,
- abaissement de la pression de commande (pl) pour le dispositif d'étranglement (6) côté alimentation et conservation de l'autre pression de commande (p2), jusqu'à ce que la différence de pression de commande prédéfinie (p2 - p1) s'établisse au niveau du distributeur (4).
